# EUROPEAN PATENT APPLICATION

(11) **EP 3 338 536 A1**
(43) Date of publication of application: **27.06.2018**
(21) Application number: 16206634.4
(22) Date of filing: 23.12.2016
(51) Int. Cl.: A01G 9/02, A01G 9/10, A01G 9/08

(54) **PLANTING SYSTEM AND METHOD FOR TRANSPLANTING A PLANT**

(71) Applicant: Growdeal Oy, 20900 Turku (FI)
(72) Inventor: SIITONEN, Petri, 20660 Littoinen (FI); HELANDER, Hannu, 20900 Turku (FI)
(74) Representative: Berggren Oy, Turku

(57) **Abstract**

The present invention relates to a planting system (301) that comprises a planting receptacle (302) and a hollow cylinder (101, 201) for receiving a root ball of a plant (401), the hollow cylinder (101, 201) being arranged at least partly inside the planting receptacle (302) in such a manner that the axis of the hollow cylinder (101, 201) is essentially perpendicular to a bottom of the planting receptacle (302), and soil (303) arranged in a space between the planting receptacle (302) and the hollow cylinder (101, 201). The present invention also relates to a method for transplanting a plant.

## Description

### TECHNICAL FIELD OF THE INVENTION

The present invention relates to a planting system and a method for transplanting a plant according to the preambles of the appended independent claims.

### BACKGROUND OF THE INVENTION

Nowadays, gardening and home-growing of plants is an important leisure activity for people. It is common to grow different flowers and greeneries at home for increasing an attractive living environment. During the recent years, a growing of useful plants such as herbs and salads has become more and more popular. Growing plants and herbs at home for food is regarded an ecologically and ethically modern way to take responsibility of reducing one's personal carbon footprint.

Many plants can be grown all the year round and without an outdoor space. It is typical to buy a plant as pre-potted seedling and transplant it to another pot or a cultivation base at home in which case an entire plant with a root ball is re-planted to a new place. Transplanting of a plant requires special equipment and accessories such as a planting pot and soil and additionally involves multiple stages of operation. Therefore, the transplanting of the plant is laborious and time consuming. There is also a possibility to fail with an alignment of the plant and cause damages to it.

### OBJECTIVES OF THE INVENTION

It is the main objective of the present invention to reduce or even eliminate problems in the prior art.

It is an objective of the present invention to provide a planting system, which facilitates planting. In more detail, it is an objective of the present invention to provide a planting system, which enables simple and easy transplanting of various kinds of plants.

It is a further objective of the invention to provide a method for transplanting a plant with a root ball properly. It is a further objective of the invention to provide a method for transplanting a plant with minimal damages to the plant.

In order to realise the above-mentioned objectives, the planting system and the method for transplanting a plant according to the invention are characterised by what is presented in the characterising parts of the appended independent claims. Advantageous embodiments of the invention are described in the dependent claims.

### DESCRIPTION OF THE INVENTION

A typical planting system according to the invention comprises a planting receptacle and a hollow cylinder for receiving a root ball of a plant, the hollow cylinder being arranged at least partly inside the planting receptacle in such a manner that the axis of the hollow cylinder is essentially perpendicular to a bottom of the planting receptacle, and soil arranged in a space between the planting receptacle and the hollow cylinder.

The planting system facilitates transplanting of a plant. In this context the term "transplanting" is used to refer to the practice of re-planting, in which a plant in one location is planted elsewhere. The planting system according to the invention can be used for transplanting variety kinds of plants, for example, flowers and veggies. Preferably, the planting system can be used for transplanting pre-grown herbs and salads with a root ball.

The planting system according to the invention provides a planting receptacle with a ready-fitted hollow cylinder inside which a root ball of a plant is to be inserted. In the planting receptacle, around the hollow cylinder, a correct amount and composition of soil is compressed. After transplanting, the roots of the plant can freely grow to the soil. By using the planting system according to the invention, the plant can be easily transplanted to a straight and correct position without special equipment and accessories. This makes transplanting and further growing of the plants easy and effortless.

The planting receptacle according to the invention can be, for example, a planting pot or a balcony box. The planting receptacle may have any shape. Preferably, the shape of the bottom of the planting receptacle is round or rectangle and the bottom is flat. The inner diameter or the side length of the planting receptacle can be, for example, in the range of 60 to 1000 mm. The height of the planting receptacle can be, for example, in the range of 50 to 1000 mm. In the planting system according to the invention the hollow cylinder is a receiving part for the root ball of the plant. The hollow cylinder is a cylinder having a through hole in a direction of its longitudinal axis. The hollow cylinder has parallel first and second ends, which are preferably perpendicular to the axis of the cylinder. The root ball of the plant is to be inserted into the hollow cylinder through the first end. An outer surface of the hollow cylinder defines an outer diameter of the hollow cylinder and an inner surface of the hollow cylinder defines an inner diameter of the hollow cylinder. The inner diameter of the hollow cylinder may be constant or alternate from the first end to the second end. A wall of the hollow cylinder remains between the outer surface and the inner surface. The inner diameter of the hollow cylinder is preferably equivalent to the diameter of the root ball. The inner diameter of the hollow cylinder can be, for example, in the range of 30 to 500 mm. The wall thickness of the hollow cylinder can be, for example, less than 5 mm. The wall of the hollow cylinder may comprise through holes for enabling the roots of the plant to grow into the soil.

The hollow cylinder is arranged at least partly into the planting receptacle in such a manner that the second end of the hollow cylinder is towards the bottom of the planting receptacle. In this case, the axis of the hollow cylinder is essentially perpendicular to the bottom of the planting receptacle. The hollow cylinder may be arranged in the center of the planting receptacle. Preferably, the hollow cylinder is arranged completely inside the planting receptacle and the second end of the hollow cylinder is against the bottom of the planting receptacle. An advantage of the hollow cylinder is that it ensures that the plant, which is to be inserted to the hollow cylinder, is in a straight position. The height of the hollow cylinder can be, for example, in the range of 50 to 1000 mm. The hollow cylinder may also be arranged to be movable in a direction perpendicular to the bottom of the planting receptacle. In that case, the height of the hollow cylinder can be adjusted with the height of the planting receptacle. The movable hollow cylinder may also be used for supporting a stem part of the plant by lifting up the hollow cylinder. This prevents the stems of the plant from falling and being damaged.

The space between the inner surface of the planting receptacle and the outer surface of the hollow cylinder is filled with soil. The soil can be arranged also to the bottom of the receptacle in which case, the second end of the hollow cylinder is arranged onto the soil. The used soil may be any substance or media in which vegetation may take root and grow, and includes not only earth but also compost, manure, muck, humus, sand and the like, adapted to support plant growth. The soil, regardless of its composition, may be filled into the planting receptacle either dry or in the presence of moisture. The soil may also comprise fertilizers for enhancing the rooting and growing of the transplanted plant.

According to an embodiment of the invention the hollow cylinder is made of a biodegradable material. In this context the term "biodegradable" refers to the materials which are capable of being broken down (decomposed) by the action of living microorganisms, usually bacteria. Suitable materials for the hollow cylinder are, for example, recycled biodegradable pulp, biodegradable plastics, board or a combination of those. An advantage of using the biodegradable material is that the hollow cylinder decomposes to soil after watering of the transplanted plant and enables better and faster rooting of the plant. Biodegradability of the hollow cylinder enables also the hollow cylinder to be recycled with soil. The biodegradation time can vary depending on the used material. The biodegradation time of the hollow cylinder can be, for example, in the range of 1 to 4 weeks.

According to an embodiment of the invention the hollow cylinder is made of a plastic material which is hard and recyclable. The used material may be any suitable recyclable plastic material, which can be formed to a shape of the hollow cylinder and has sufficient hardness, for example, polymer, composite or combinations of those. Preferably, the hollow cylinder is made of polymer, such as polyethylene or polypropylene. If the hollow cylinder is made of a non-biodegradable material, the wall of the hollow cylinder may comprise through holes for the better rooting of the plant. The hollow cylinder made of polymer can be re-used for planting or recycled with the plastics waste.

According to an embodiment of the invention the inner diameter of the hollow cylinder is less than 500 mm. The inner diameter of the hollow cylinder may be constant from the first end of the hollow cylinder to the second end. The inner diameter of the first end of the hollow cylinder may be different than the inner diameter of the second end of the hollow cylinder in such a manner that the inner diameter of the first end is larger than the inner diameter of the second end. Preferably, the inner diameter of the hollow cylinder is the same as the diameter of the root ball of the plant. This ensures good fit and support for the plant.

According to an embodiment of the invention the hollow cylinder comprises a detachable cover for covering the first end of the hollow cylinder. The cover prevents the access of the soil into the hollow cylinder during the filling of the planting receptacle or during the storage. The cover may be made of a biodegradable material or any suitable recyclable plastic material, such as polymer, composite or combination of these. Preferably, the cover is made of the same material as the hollow cylinder.

According to an embodiment of the invention the planting system comprises a base plate attached to the second end of the hollow cylinder for supporting the hollow cylinder in a perpendicular manner. The base plate according to an embodiment of the invention comprises a first surface and a second surface. The hollow cylinder is attached to the base plate in such a manner that the second end of the hollow cylinder is against the first surface of the base plate. The hollow cylinder is preferably located in the center of the first surface and the axis of the hollow cylinder is preferably perpendicular to the first surface of the base plate. The base plate supports the hollow cylinder to straight position. The hollow cylinder may be attached to the base plate, for example, with glue or tape. The hollow cylinder attached to the base plate may be arranged into the planting receptacle in such a manner that the second surface of the base plate is essentially parallel with the bottom of the planting receptacle.

According to an embodiment of the invention the hollow cylinder and the base plate are a uniform piece. Due to the uniform structure, there are no joints between the hollow cylinder and the base plate, which makes the structure stronger.

According to an embodiment of the invention the shape of the base plate is round or rectangle. Preferably, the shape of the base plate is the same as the shape of the bottom of the planting receptacle. The size of the base plate may be the same or bigger than the size of the second end of the hollow cylinder. Preferably, the base plate has the same size as the bottom of the planting receptacle. According to an embodiment of the invention the base plate has the same size as the bottom of the planting receptacle at least in one direction. In a case where the shape of the bottom of the planting receptacle is round, the base plate may have a same diameter as the diameter of the bottom of the planting receptacle. In a case where the shape of the bottom of the planting receptacle is rectangular, the base plate may have a same side length as the bottom of the receptacle in at least one direction. For example, if the planting receptacle is a rectangular box, the base plate may have at least the same width or the same depth than the bottom of the box. An advantage of having the same size at least in one direction is that the base plate stays still in the planting receptacle during the filling of the receptacle with soil and supports the hollow cylinder during the planting. The size of the base plate can be changed, for example, by cutting, bending or tearing it to a desired size before use. According to another embodiment of the invention the base plate is flat.

According to an embodiment of the invention the base plate is made of a biodegradable material or a plastic material. Suitable materials for the base plate are, for example, recycled biodegradable pulp, biodegradable plastics, board or a combination of those. If the base plate is made of the biodegradable material it can decompose to soil after watering of the transplanted plant and enables better and faster rooting of the plant. Biodegradability of the base plate enables also the base plate to be recycled with soil. The biodegradation time can vary depending on the used material. The biodegradation time of the base plate can be, for example, in the range of 1 to 4 weeks. The base plate may also be made of any other suitable recyclable plastic material having a sufficient hardness, such as polymer, ceramics or combinations of those. Preferably, the base plate is made of polymer, such as polyethylene or polypropylene. The base plate made of polymer can be re-used for planting or recycled with plastics waste.

According to an embodiment of the invention the planting receptacle comprises a space for excess water between the hollow cylinder and the bottom of the planting receptacle. In this case, the planting receptacle may comprise an intermediate floor or clips for the base plate. An advantage of the space is that the excess water can flow away from the roots of the plant and the plant is not suffering overwatering.

According to an embodiment of the invention the planting receptacle comprises a drainage material at the bottom of the planting receptacle. In this case, the soil is to be arranged over the drainage material. The used drainage material can be, for example, coarse sand, gravel, pebbles or pot shards. The drainage material allows water in the soil to drain freely, so, adequate air is available for the roots. The hollow cylinder can be placed over the drainage material or the drainage material can be arranged around the second end of the hollow cylinder, when the hollow cylinder is against the bottom of the planting receptacle.

According to an embodiment of the invention the planting system comprises a detachable cover for covering the planting receptacle. The cover prevents the access of the soil from the planting receptacle during the storage and enables the planting receptacles to be stored one on the other. The cover may be made of the recyclable waterproof board, preferably paperboard.

According to an embodiment of the invention the planting receptacle is made of a recyclable waterproof board. The used board may be any board material which can be recycled, for example, paperboard or cardboard. The board may be coated to be waterproof or treated with a waterproofing agent, in which case it will not disintegrate when exposed to moisture for long durations. At least the inner surface of the planting receptacle is coated or treated to remain relatively unaffected by water. The empty planting receptacle may be recycled with the board waste. The outer surface of the planting receptacle may be patterned or colored for a decoration purposes.

The present invention also relates to a method for transplanting a plant. A typical method according to the invention comprises providing a planting system according to the invention, and inserting a root ball of the plant into the hollow cylinder of the planting system. After inserting the root ball of the plant to the hollow cylinder, the roots of the plant can grow to the soil. The hollow cylinder supports the plant to a straight and correct position.

According to an embodiment of the invention the method comprises lifting the hollow cylinder for supporting a stem part of the plant. This prevents the stems of the plant from bending and being damaged. At the same time, the soil can spread under the hollow cylinder, which enables an access of nutrients to the plant and enhances the rooting.

The hollow cylinder can also be removed from the planting receptacle before transplanting a plant. The root ball of the plant may be inserted to the hole, which has been generated to the soil and the soil may be compressed around the root ball.

An advantage of using the planting system according to the invention for transplanting a plant is that a life span of the plants, for example, potted herbs or salads, becomes longer when they can be further grown in the planting system. Because of this, an amount of waste and rubbish is reduced. Thus, using the planting system for further growing of the plants is more ecological choice than throwing the viable plant to rubbish bin after the first time of use. An outdoor garden, special equipment and accessories are not necessarily needed. Thus, regardless of the residential form, the planting system is suited for home-growing of the plants.

The exemplary embodiments of the invention presented in this text are not interpreted to pose limitations to the applicability of the appended claims. The verb "to comprise" is used in this text as an open limitation that does not exclude the existence of also unrecited features. The features recited in the dependent claims are mutually freely combinable unless otherwise explicitly stated.

The exemplary embodiments presented in this text and their advantages relate by applicable parts to the planting system as well as the method for transplanting a plant according to the invention, even though this is not always separately mentioned.

### BRIEF DESCRIPTION OF THE DRAWINGS

- Fig. 1: illustrates an example of a hollow cylinder,
- fig. 2: illustrates an example of a combination of a hollow cylinder and a base plate,
- fig. 3: illustrates a planting system according to an embodiment of the invention, and
- fig. 4: illustrates the planting system of fig. 3 with a plant.

### DETAILED DESCRIPTION OF THE DRAWINGS

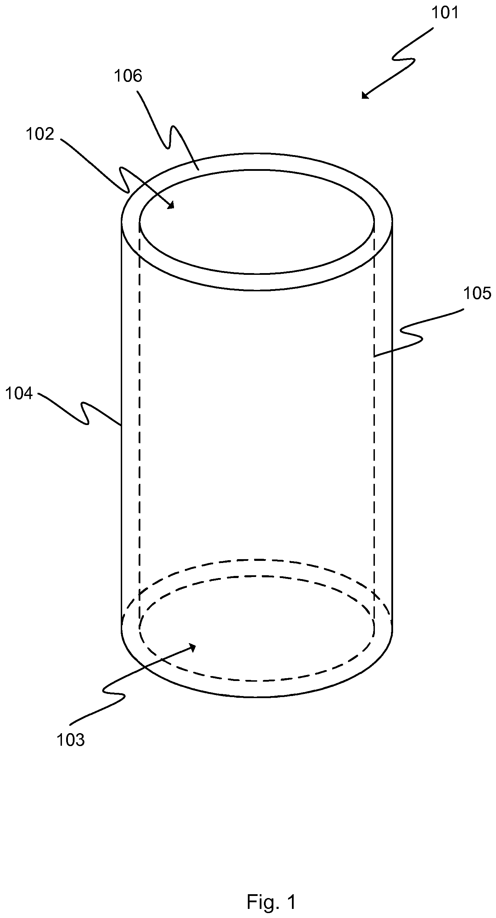

Fig. 1 illustrates an example of a hollow cylinder. The hollow cylinder 101 has a first end 102 and a second end 103. A root ball of a plant can be inserted into the hollow cylinder 101 through the first end 102. The hollow cylinder 101 supports the plant to a straight and the correct position. The hollow cylinder 101 has an outer surface 104 defining an outer diameter and an inner surface 105 defining an inner diameter. The area between the inner and the outer surfaces is a wall 106. The inner diameter of the hollow cylinder 101 is constant from the first end 102 to the second end 103.

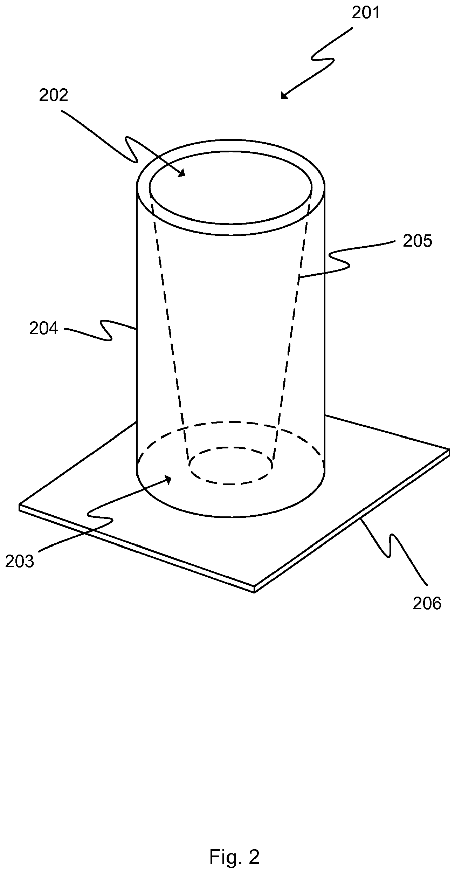

Fig. 2 illustrates an example of a combination of a hollow cylinder and a base plate. The hollow cylinder 201 has parallel first and second ends 202 and 203. A root ball of a plant is to be inserted into the hollow cylinder 201 through the first end 202. An outer surface 204 of the hollow cylinder 201 defines an outer diameter and an inner surface 205 of the hollow cylinder 201 defines an inner diameter. The inside of the hollow cylinder 201 has a shape of a truncated cone. The inner diameter of the hollow cylinder 201 decreases from the first end 202 to the second end 203. A base plate 206 is attached to the second end 203 of the hollow cylinder 201 with glue. The hollow cylinder 201 is perpendicular to the base plate 206.

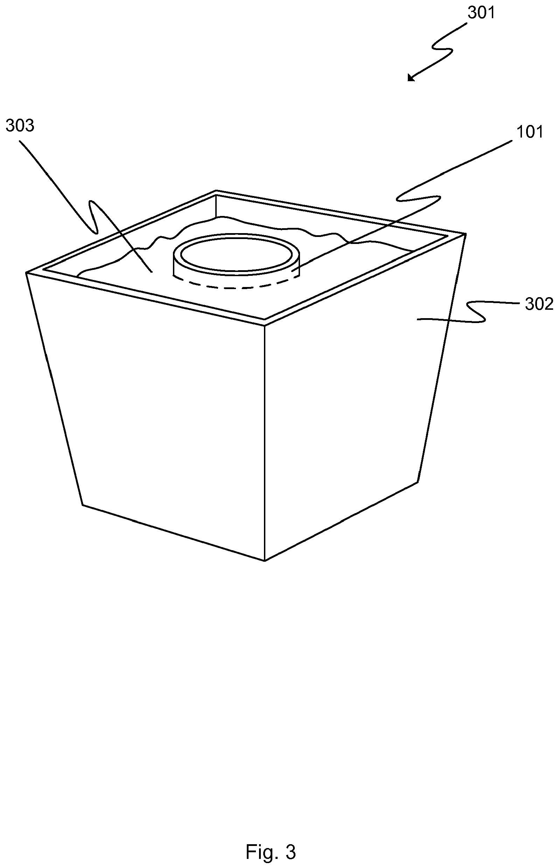

Fig. 3 illustrates a planting system according to an embodiment of the invention. The planting system 301 comprises a planting receptacle 302, a hollow cylinder 101 as presented in fig. 1 and soil 303. The hollow cylinder 101 is arranged inside the planting receptacle 302 in such a manner that the axis of the hollow cylinder 101 is essentially perpendicular to a bottom of the planting receptacle 302. The hollow cylinder 101 is essentially in the center of the planting receptacle 302. A space between the planting receptacle 302 and the hollow cylinder 101 is filled with soil 303. The planting system 301 facilitates transplanting of a plant. A root ball of the plant can be inserted inside the hollow cylinder 101. The roots of the plant can grow to the soil 303 and the hollow cylinder 101 supports the plant to a straight and correct position. The planting system 301 is a ready-made set for transplanting and further growing of, for example, potted herbs and salads.

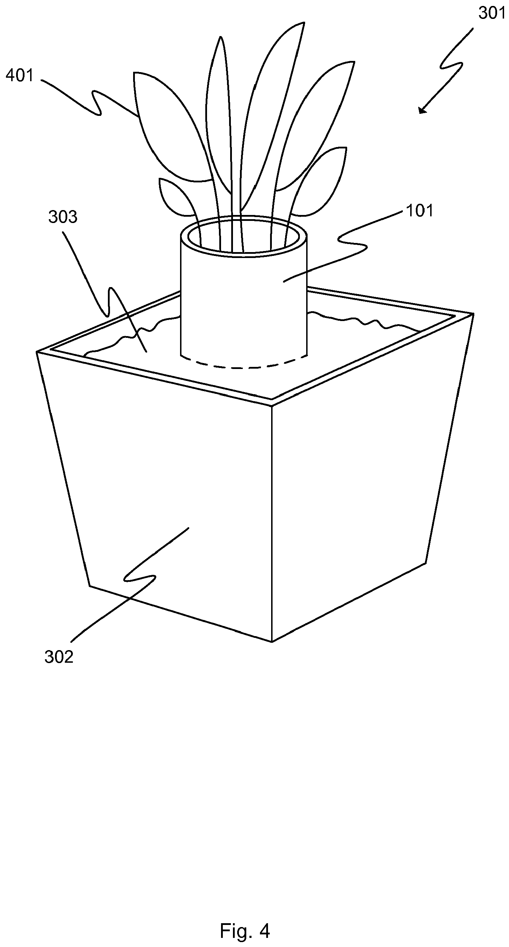

Fig. 4 illustrates the planting system of fig. 3 with a plant. The plant 401 is inserted into the hollow cylinder 101. The hollow cylinder 101 is lifted up in direction perpendicular to the bottom of the planting receptacle 302. The hollow cylinder 101 supports the stem part of the plant 401 and prevents it from bending and being damaged. At the same time, the soil 303 can spread under the hollow cylinder 101, which enables an access of nutrients to the plant and enhances rooting.

Only advantageous exemplary embodiments of the invention are described in the figures. It is clear to a person skilled in the art that the invention is not restricted only to the examples presented above, but the invention may vary within the limits of the claims presented hereafter. Some possible embodiments of the invention are described in the dependent claims, and they are not to be considered to restrict the scope of protection of the invention as such.

## Claims

1. A planting system, comprising:
- a planting receptacle,
**characterised in that** the planting system comprises:
- a hollow cylinder for receiving a root ball of a plant, the hollow cylinder being arranged at least partly inside the planting receptacle in such a manner that the axis of the hollow cylinder is essentially perpendicular to a bottom of the planting receptacle, and
- soil arranged in a space between the planting receptacle and the hollow cylinder.

2. The planting system according to claim 1, **characterised in that** the hollow cylinder is made of a biodegradable material.

3. The planting system according to claim 1, **characterised in that** the hollow cylinder is made of a plastic material.

4. The planting system according to any of the preceding claims, **characterised in that** the inner diameter of the hollow cylinder is less than 500 mm.

5. The planting system according to any of the preceding claims, **characterised in that** the hollow cylinder comprises a detachable cover for covering the first end of the hollow cylinder.

6. The planting system according to any of the preceding claims, **characterised in that** the planting system comprises a base plate attached to a second end of the hollow cylinder.

7. The planting system according to claim 6, **characterised in that** the hollow cylinder and the base plate are uniform piece.

8. The planting system according to claim 6 or 7, **characterised in that** the shape of the base plate is round or rectangle.

9. The planting system according to any of claims 6 to 8, **characterised in that** the base plate is made of a biodegradable material or a plastic material.

10. The planting system according to any of the preceding claims, **characterised in that** the planting receptacle comprises a space for excess water between the hollow cylinder and the bottom of the planting receptacle.

11. The planting system according to any of the preceding claims, **characterised in that** the planting receptacle comprises drainage material at the bottom of the planting receptacle.

12. The planting system according to any of the preceding claims, **characterised in that** the planting system comprises a detachable cover for covering the planting receptacle.

13. The planting system according to any of the preceding claims, **characterised in that** the planting receptacle is made of a recyclable waterproof board.

14. A method for transplanting a plant, **characterised in that** the method comprises:
- providing a planting system according to any of the preceding claims, and
- inserting a root ball of the plant into the hollow cylinder of the planting system.

15. The method according to claim 13, **characterised in that** the method comprises lifting the hollow cylinder for supporting a stem part of the plant.
